Europäisches Patentamt

European Patent Office

Office européen des brevets

(19)

(11) Publication number: **0 094 610**
**A2**

(12) # EUROPEAN PATENT APPLICATION

(21) Application number: **83104640.4**

(22) Date of filing: **11.05.83**

(51) Int. Cl.³: **F 16 K 31/06**

(30) Priority: **18.05.82 JP 72620/82 U**
**18.05.82 JP 72621/82 U**

(43) Date of publication of application:
**23.11.83 Bulletin 83/47**

(84) Designated Contracting States:
**DE**

(71) Applicant: **DIESEL KIKI CO., LTD.**
**No. 6-7, Shibuya 3-chome**
**Shibuya-ku Tokyo(JP)**

(72) Inventor: **Nakajima, Nobuyuki, Dipl.-Ing.**
**No. 13-26, Yakyu-cho 3-chome**
**Higashimatsuyama-shi Saitama-ken(JP)**

(74) Representative: **Raible, Hans Dipl.-Ing.**
**Lenbachstrasse 32**
**D-7000 Stuttgart 1(DE)**

(54) **Solenoid operated valve for oil hydraulic circuit and method for assembling same.**

(57) A fixed core is disposed adjacent a main valving unit having inlet and outlet ports, a valve body interposed between the two ports, and a valve chamber accommodating the valve body. The fixed core has a radial flange disposed on one end face of the main valving unit and an axial barrel portion integral with the radial flange, on which a tubular member is fitted. The tubular member accommodates therein a movable core which is drivingly coupled to the valve body and carries a solenoid fitted thereon. A covering means encloses the movable core, the cylindrical member and the solenoid and is fixed to the main valving unit through the radial flange of the fixed core, by a fastening means. Sealing means seal in liquidtight manner between the fixed core and the tubular member, between the main valving unit and the covering means, and between the main valving unit and the fixed core. The fixed core, the tubular member, the solenoid and the covering means are assembled in a manner successively stacked one upon another on the main valving unit, in the order mentioned.

*FIG.1*

SOLENOID-OPERATED VALVE FOR OIL HYDRAULIC CIRCUIT
AND METHOD FOR ASSEMBLING SAME

BACKGROUND OF THE INVENTION

This invention relates to a solenoid operated valve for use in oil hydraulic circuits, and more particularly to a solenoid operated valve of this kind which is simple in construction, and easy to assemble, as well as a method for assembling same.

A solenoid operated valve is arranged in an oil hydraulic circuit which includes an oil tank, an oil pump, a hydraulic actuator, and pipe lines connecting between these elements, for blocking or changing the flow of hydraulic operating oil flowing in the same circuit.

As well known, e.g. from Japanese Patent Publication No. 49-10371, a solenoid operated valve of this kind comprises inlet and outlet ports; a valve body disposed to close or open a passage connecting between the inlet and outlet ports, a plunger formed of a magnetic material, arranged across the above passage and coupled to the valve body, a spring urging the valve body so as to cause same to close or open, a solenoid disposed to generate an electromagnetic force for moving the plunger in a direction of the valve body being closed or opened, against the force of the spring, sealing members for preventing leakage of hydraulic operating oil to the outside, and a casing enclosing the above elements.

However, conventional valves of this kind are composed of rather many component parts, making the manufacture and assemblage complicated, resulting in high production costs.

OBJECTS AND SUMMARY OF THE INVENTION

It is an object of the invention to provide a solenoid operated valve for oil hydraulic circuits, which is simple in construction and adapted such that the component parts can be successively stacked one upon another to assemble the valve, thereby facilitating the manufacture and assemblage and reducing the production cost.

It is a further object of the invention to provide a solenoid operated valve for oil hydraulic circuits, which includes a core or cores formed of sintered metal and therefore requring no machining, thereby facilitating the manufacture and being light in weight.

It is another object of the invention to provide a solenoid operated valve for oil hydraulic circuits, which has high liquidtightness and therefore is free from leakage of hydraulic operating oil to the outside.

It is a still further object of the invention to provide a method for assembling a solenoid operated valve for oil hydraulic circuits in a very simple manner, thereby further reducing the production cost.

A solenoid operated valve according to the invention includes a main valving unit which is essentially comprised of a valve chamber, a valve body, and inlet and outlet ports between which the valve body is arranged for displacement to interrupt communication or establish same therebetween. Disposed adjacent one end face of the main valving unit is a fixed core which has a radially extending flange disposed in contact with the one end face of the main valving unit and a barrel portion axially extending integrally from the flange in a direction away from the main valving unit. A tubular member formed of a non-magnetic material is fitted on the barrel portion of the fixed core and accommodates therein a movable core axially movable and drivingly connected to the valve body by coupling means and carries a solenoid fitted around it. A covering means, which is formed of a magnetic material, encloses the movable core, the tubular member, and the solenoid. When the solenoid is energized, the solenoid, the fixed core, the movable core and the covering means cooperate to form a magnetic loop for displacing the valve body.

The covering means is fixed to the main valving unit by fastening means, with the radially extending flange of the fixed core interposed between them.

Sealing means are provided for sealing in liquidtight manner between the fixed core and the tubular member, between the tubular member and the covering means, and between the main valving unit and the fixed core.

Further, according to the invention, a method for assembling the solenoid operated valve constructed as above is provided, which comprises the steps of: (a) placing a radially extending flange of a fixed core in contact with one end face of a main valving unit while interposing a first annular member between the radially extending flange of the fixed core and the main valving unit; (b) inserting a coupling rod through a first central hole formed through the fixed core and a second central hole formed through the main valving unit; (c) fitting a tubular member around a barrel portion axially extending integrally from the radially extending flange of the fixed core in a direction away from the main valving unit; (d) placing a solenoid around the tubular member; (f) placing covering means over the movable core, the tubular member and the solenoid in a manner such that the covering means has a radially extending flange disposed in contact with the radially extending flange of the fixed core, while interposing a second annular sealing member between the covering means and the tubular member; and (g) fastening the covering means to the main valving unit by fastening means; wherein the steps (a) through (g) are carried out in the order given above.

The above and other objects, features and advantages of the invention will be more apparent from the ensuing detailed description taken in connection with the accompanying drawings.

BRIEF DESCRIPTION OF THE DRAWINGS

Fig. 1 is a view illustrating a solenoid operated valve for oil hydraulic circuits, according to one embodiment of the invention, with its right half shown in longitudinal section; and

Fig. 2 is a view similar to Fig. 1, illustrating another embodiment of the invention.

DETAILED DESCRIPTION

The invention will now be described in detail with reference to the drawings.

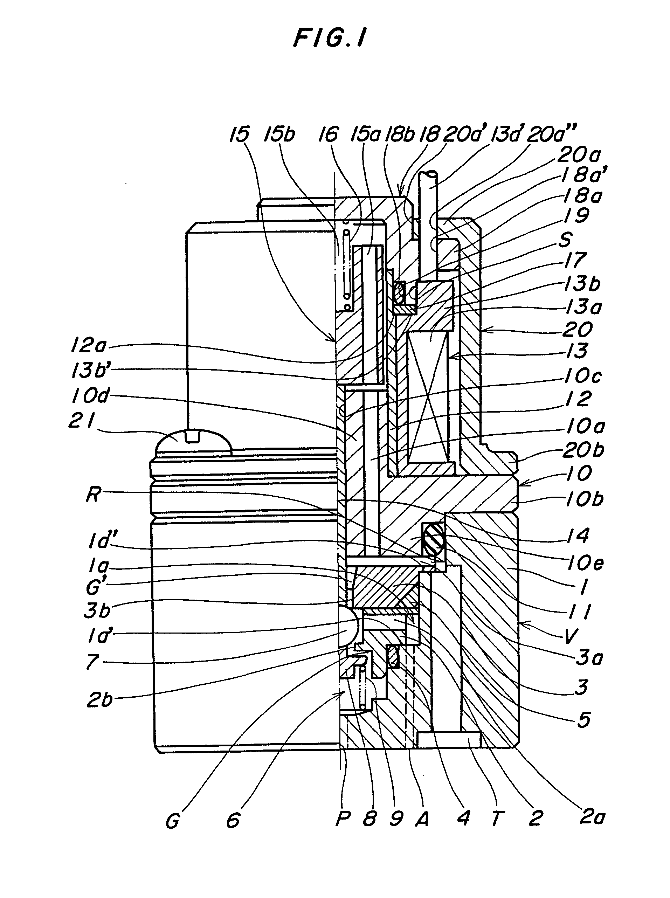

Referring first to Fig. 1, there is illustrated an embodiment of a solenoid operated valve according to the invention. Reference numeral 1 designates a valve casing which has a cylindrical configuration and has a recess 1a opening in its inner end face. The valve casing 1 is further formed with an inlet port P at a radially inward location, a return port T having a larger diameter at a radially outward location, and an outlet port A radially intermediate between the two ports P, T, all axially extending and opening in the outer end face of the valve casing 1. These ports P, T and A are to be connected to an oil pump, an oil tank and an oil hydraulic actuator in an associated oil hydraulic circuit, none of which is shown.

The recess 1a of the valve casing 1 has a generally inverted frustoconical shape, in which an annular inner piece 2 is fitted on an annular stepped shoulder 1a' formed in the same recess via an O-ring 4, and an annular outer piece 3 on another annular stepped shoulder 1a" formed in the recess 1a via an O-ring 5, respectively. The recess 1a cooperates with the inner and outer pieces 2, 3 to define therebetween a valve chamber 6 with which the inlet port P directly communicates, whereas the outlet port A and the return port T communicate with the valve chamber 6, respectively, by way of a communication passage 2a radially formed through the inner piece 2, and a communication passage 3a radially formed in one end face of the outer piece 3.

Arranged within the valve chamber 6 are a ball valve 7 and a valve seat 8 on which the ball valve 7 is seated, the ball valve 7 and the valve seat 8 being urged toward the outer piece 3 by a compression spring 9 interposed between the valve seat 8 and the bottom surface of the recess 1a. More specifically, the valve seat 8 is disposed in a central hole 2b formed through the inner piece 2 and cooperate therewith to define an annular gap G communicating with the ports P, A. On the other hand, the outer piece 3 has a through hole 3b through which a coupling rod 14 extends, and the through hole 3b defines a further annular gap G' between itself and the rod 14. The above stated elements 1 - 9 cooperatively form a main valving unit V.

A fixed core 10 is disposed on an inner end face of the casing 1 of the main valving unit V and has a central protruded portion 10e fitted in an opening R defined between the recess 1a and an inner end face of the outer piece 3, with an O-ring 11

interposed between the same protruded portion 10e and the casing 1. This core 10 is formed of a magnetic sintered metal, and has a radially extending annular flange 10b and a cylindrical barrel portion 10d having a smaller diameter than the central protruded portion and axially extending integrally from the flange 10b in a direction away from the main valving unit V. The fixed core 10 has an axially extending passage 10a formed through the barrel portion 10d and communicating with the communication passage 3a in the outer piece 3, as well as a central through hole 10c also formed through the barrel portion along its axis and through which the aforementioned coupling rod 14 axially movably extends. Fitted around the barrel portion 10d of the fixed core 10 is a tubular member 12 which is formed of a non-magnetic material, and has an end portion located at a boundary between the flange 10b and the barrel portion 10d and brazed to the barrel portion 10d and the flange 10b along its whole periphery.

Fitted around the tubular member 12 is a coil assembly 13 which is formed by a solenoid 13a and an annular coil support 13b on which the solenoid 13a is wound. A movable core 15 formed of a magnetic sintered metal is axially movably received within the tubular member 12. The movable core 15 has a passage 15a axially formed therethrough and disposed in alignment with the passage 10a in the fixed core 10 to cooperate therewith to allow feeding of hydraulic operating oil to a zone around the movable core 15. The movable core 15 has a recess 15b formed in its outer end face, in which is disposed a compression spring 16 having a smaller setting load than the aforementioned compression spring 9.

An outer end portion of the tubular member 12 has its outer peripheral surface formed with an annular stepped shoulder 12a cooperating with an annular stepped shoulder 13b' formed in an inner peripheral surface of a corresponding outer end portion of the coil support 13b to define therebetween an annular groove S. A covering member 18 in the form of a cap has an inner peripheral edge fitted in the annular groove S in contact with a washer 17 disposed in the same groove S, and encloses the movable core 15 in a manner that its bottom inner surface urges the movable core 15 against one end face of the coupling rod 14 via the above-mentioned spring 16 interposed therebetween. The above peripheral edge of the covering member 18 has its inner peripheral surface formed with an annular stepped shoulder 18b and an O-ring 19 is interposed between the same annular stepped shoulder and the opposed outer peripheral surface of the outer end portion of the tubular member 12. The covering member 18 further has an annular flange 18a radially extending integrally from its outer peripheral surface and formed with a through hole 18a' through which a lead wire 13a' of the solenoid 13 extends. This covering member 18 is formed of a magnetic metal and stamped from a plate of such metal. Another or peripheral covering member 20, which is in the form of a cap and is also formed of a stamped magnetic metal material, is disposed over the coil assembly 13 in a manner that its inner peripheral surface portion close to the bottom is disposed in contact with the outer peripheral surface of the flange 18a of the covering member 18, and its annular flange 20b formed at its peripheral edge is disposed in contact with the outer end face of the flange 10b of the fixed core 10. Further, the bottom wall 20a of the covering member 20 has a central opening 20a' and a smaller through hole 20a" formed therethrough, through which the covering member 18 and the above-mentioned lead wire 13'a extend, respectively. This peripheral covering member 20 has its above flange 20b secured to the fixed core 10 as well as to the valve casing 1, by means of a plurality of bolts 21 (only one of them is shown) penetrated through the flange 10b of the core 10 and the valve casing 1.

The manner of assembling the solenoid operated valve according to the invention constructed as above will now be described: First, the spring 9 is placed into the recess 1a of the valve casing 1 of the main valving unit V, on which spring is placed the valve seat 8, followed by fitting the inner piece 2 into the same recess 1a at the inner stepped shoulder 1a' with the O-ring 4 interposed between the inner piece 2 and the inner stepped shoulder 1a'. After this, the ball valve 7 is positioned into the central hole 2b of the inner piece 2, and then the outer piece 3 is fitted into the recess at the outer stepped shoulder 1a" with the O-ring 5 interposed between the outer piece 3 and the stepped shoulder 1a" so as to have its communication passage 3a in alignment with the return port T. The main valving unit V is thus assembled. The central projected portion 10e of the fixed core 10 is inserted into the recess R with the O-ring 11 interposed between the same projected portion 10e and the valve casing 1, so as to have the passage 10a in alignment with the communication passage 3a. Then, the coil assembly 13 is fitted around the outer peripheral surface of the tubular member 12 which is preferably joined to the barrel portion 10d of the fixed core 10 by brazing in advance. The coupling rod 14 is then fitted through the central hole 10c of the fixed core 10, and then the movable core 15 is inserted into the tubular member 12 with its passage 15a in alignment with the passage 10a of the fixed core 10, followed by placing the spring 16 into the recess 15b of the movable core 15. Then, the peripheral edge portion of the central covering member 18 is brought into the annular groove S, after the lead wire 13'a is fitted through the hole 18a' of the covering member 18 and the washer 17 and the O-ring 19 are placed into the groove S, so as to urgingly hold the O-ring 19 in the same groove S. Thereafter, the peripheral covering member 20 is mounted so as to cover the central covering member 18 in a manner that the lead wire 13a' is first fitted through the hole 20a" of the peripheral covering member 20, and then the cylindrical portion of the covering member 18 is passed through the central hole 20a' of the covering member 20, while the inner surface of the bottom wall 20a and the flange 20b are brought into contact with the flange 18a of the covering member 18 and the flange 10b of the fixed core 10, respectively. Then, the bolts 21 are screwed through the flange 20b of the peripheral covering member 20, the flange 10b of the fixed core 10 and the valve casing 1 to tightly fasten them together.

The operation of the solenoid operated valve according to the invention is as follows: When the solenoid 13a is in a deenergized state, the spring 9, which, as previously noted, has a setting load larger than the opposing spring 16 urging the movable core 15 inwardly, urgingly biases the valve seat 8, that is, the ball valve 7 into a position closing the gap G' between the central hole 3b of the outer piece 3 and the coupling rod 14 to block the communication between the return port T and the valve chamber 6, while simultaneously opening the gap G between the central hole 2b of the inner piece 2 and the valve seat 8 to establish the communication between the inlet port P and the outlet port A through the communication passage 2a. On this occasion, hydraulic operating oil pumped by the oil pump is supplied to the oil hydraulic actuator through the mutually communicating ports P, A to drive the same actuator.

Then, when the solenoid 13a is energized, a magnetic loop is formed, which extends through the same solenoid 13, the central covering member 18, the movable core 15, the fixed core 10, and the peripheral covering member 20 so that the resultant magnetic force attracts the movable core 15 to bring it into contact with the associated end face of the barrel portion 10d of the fixed core 10 against the force of the spring 9. Consequently, the ball valve 7 is urgedly displaced downwardly as viewed in Fig. 1, via the rod 14 to cause opening of the gap G', while simultaneously closing the gap G, thereby establishing the communication between the outlet port A and the return port T through the communication passage 2a, the gap G' and the communication passage 3a as well as interrupting the communication between the ports A, T and the inlet port P. Accordingly, the operating oil supplied to the oil hydraulic actuator is returned to the oil tank by way of the mutually communicating ports A, T. Incidentally, the operating oil leaked to the space 15b in the movable core 15 through the gap G' travels back through the passages 15a, 10a, the central hole 3b and the return port T, to be returned to the oil tank.

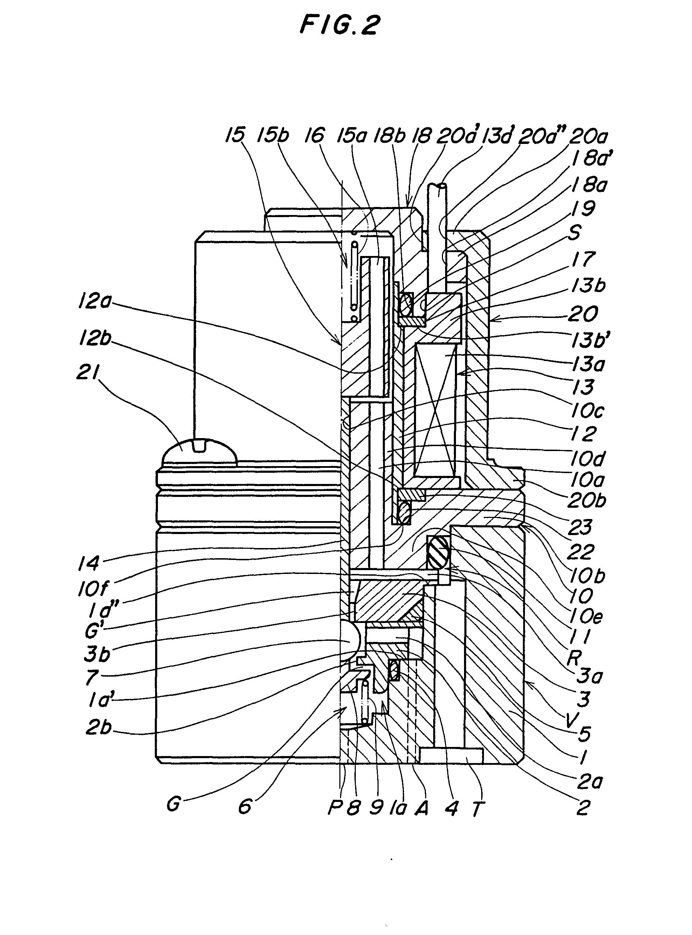

Fig. 2 illustrates a solenoid operated valve according to a second embodiment of the invention. In Fig. 2, corresponding elements to those in Fig. 1 are designated by identical reference numerals. The solenoid operated valve of Fig. 2 is different from the valve of Fig. 1 in the sealing means sealing between the tubular member 12 and the fixed core 10. More specifically, the fixed core 10 has an annular stepped groove 10f formed therein at a boundary between one end face of the flange 10b facing toward the movable core 15 and the outer peripheral surface of the barrel portion 10d, whereas the inner end portion of the tubular member 12 has its outer peripheral surface formed with an annular stepped shoulder 12b. An O-ring 22 and a washer 23 are fitted into the annular stepped groove 10f in the order mentioned, while the stepped inner end portion of the tubular member 12 is inserted into a gap defined between the O-ring 22 and the barrel portion 10d, and then the coil support 13b is placed in place so as to have the stepped shoulder 12b of the tubular member 12 and the bottom surface of the coil support 13b urgingly hold the O-ring 22 and the washer 23 in place.

The other elements, not referred to above, of the solenoid operated valve of Fig. 2, as well as the operation thereof are the same as those of the preceding embodiment, decription of which is therefore omitted.

As noted above, the present invention provides excellent results as follows:

(1)  Since the valve is constructed such that the fixed core, the tubular member, the movable core, the springs, the coil assembly and the covering members are successively stacked one upon another on the main valving unit, and also the valve is generally simple in construction, the manufacture and assemblage are easy, thereby reducing the production cost;

(2)  Since the fixed core and the movable core are made of a magnetic sintered metal, desired size tolerances are available without requiring any machining operation, thereby also reducing the production cost as well as reducing the weight;

(3)  Since the covering members are made of a stamped magnetic metal, the production cost can be further reduced; and

(4)  The provision of sealing means comprised of an annular sealing member between the covering means and the tubular member, and sealing means comprised of brazing means or an annular sealing member between the tubular member and the fixed core, can achieve high liquidtightness at the junctions, thereby avoiding leakage of hydraulic operating oil to the outside.

While preferred embodiments of the invention have been described, variations thereto will occur to those skilled in the art within the scope of the present inventive concepts which are delineated by the following claims.

**0094610**

What is claimed is:

1. A solenoid operated valve for use in an oil hydraulic circuit, comprising: a main valving unit including a valve chamber, a valve body accommodated within said valve chamber, an inlet port and an outlet port, said valve body being arranged between said inlet and outlet ports for displacement to interrupt communication therebetween or establish same; a fixed core disposed adjacent one end face of said main valving unit, said fixed core having a radially extending flange disposed in contact with said one end face of said main valving unit and a barrel portion axially extending integrally from said radially extending flange in a direction away from said main valving unit; a tubular member fitted around said barrel portion of said fixed core, said tubular member being formed of a non-magnetic material; a movable core disposed in said tubular member and axially movable therein; coupling means drivingly coupling said movable core to said valve body of said main-valving unit; a solenoid disposed around said tubular member; covering means enclosing said movable core, said tubular member and said solenoid, said covering means being formed of a magnetic material; whereby when energized, said solenoid cooperates with said fixed core, said movable core and said covering means to form a magnetic loop for causing said movable core and said coupling means to displace said valve body; sealing means sealing in liquidtight manner between said fixed core and said tubular member, between said tubular member and said covering means, and between said main valving unit and said fixed core; and fastening means fixing said covering means to said main valving unit through said radially extending flange of said fixed core.

2. A solenoid operated valve as claimed in Claim 1, wherein said tubular member has one end portion facing said fixed core, said sealing means comprising means brazing said one end portion of said tubular member to said fixed core along a whole periphery thereof.

3. A solenoid operated valve as claimed in Claim 2, wherein said one end portion of said tubular member is disposed at a boundary between said radially extending flange of said fixed core and said barrel portion thereof.

4. A solenoid operated valve as claimed in Claim 1, wherein said sealing means comprises an annular groove formed around a boundary between said radially extending flange of said fixed core and said barrel portion thereof, and an annular sealing member disposed in said annular groove and sealing between said fixed core and said tubular member.

5. A solenoid operated valve as claimed in Claim 4, wherein said tubular member has one end portion facing said fixed core, said one end portion of said tubular member having an outer peripheral surface formed with an annular stepped shoulder, said one end portion being disposed in said annular groove whereby said stepped shoulder urgingly holds said annular sealing member in said annular groove.

6. A solenoid operated valve as claimed in any of Claims 1 through 5, wherein at least one of said fixed core and said movable core is formed of a magnetic sintered metal.

7. A solenoid operated valve as claimed in any of Claims 1 through 6, wherein said covering means comprises at least one metallic material which has been stamped.

8. A solenoid operated valve as claimed in any of Claims 1 through 7, including a support member fitted around said tubular member and supporting said solenoid, and wherein said sealing means comprises an annular recess defined between one end portion of said support member remote from said fixed core and a portion of said tubular member facing said one end portion of said support member, a second annular sealing member disposed in said annular recess, and one end portion of said covering means disposed in said annular recess and urgingly holding said second annular sealing member in said annular recess.

9. A solenoid operated valve as claimed in any of Claims 1 through 8, wherein said covering means comprises a first covering member having the shape of a cap and enclosing at least part of said movable core, said first covering member having a peripheral surface formed with a radially extending flange, and a second covering member having the shape of a cap and enclosing at least part of said first covering member and said solenoid, said second covering member having a bottom portion engaging said radially extending flange of said first covering member and a peripheral edge formed with a radially extending flange and disposed in contact with said radially extending flange of said fixed core.

10. A solenoid operated valve as claimed in Claim 9, wherein said radially extending flange of said first covering member and said bottom portion of said second covering member have through holes aligned with each other through which a lead wire leading to said solenoid extends.

11. A solenoid operated valve as claimed in any of Claims 1 through 10, wherein said main valving unit comprises a valve casing having a recess opening in one end face thereof and said inlet and outlet ports formed therein, an inner member disposed in said recess and having a central hole formed therethrough, an outer member disposed in said recess at a side of said inner member toward said fixed core, said outer member cooperating with said recess to define an opening in which an associated end portion of said fixed core is received, said outer member also cooperating with said recess and said central hole of said inner member to define said valve chamber therebetween.

12. A solenoid operated valve as claimed in Claim 11, wherein said coupling means comprises a coupling rod extending through first and second central holes formed through said fixed core and said outer member, respectively, said coupling rod having opposite ends thereof disposed for urging contact with said valve body and said movable core, a first spring urging said valve body toward said coupling rod, and a second spring urging said movable core toward said coupling rod.

13. A solenoid operated valve as claimed in Claim 12, including a return port formed in said valve casing, a communication passage formed in said outer member and communicating at one end with said return port and at another end with said valve chamber, a first through hole axially extending through said barrel portion of said fixed core and communicating with said communication passage, a second through hole axially extending through said movable core and communicating with said first through hole, and an annular gap formed between said second central through hole of said outer member and said coupling rod and communicating with said communication passage of said outer member.

14. A method of assembling a solenoid operated valve for use in an oil hydraulic circuit, comprising the steps of: (a) placing a radially extending flange of a fixed core in contact with one end face of a main valving unit while interposing a first annular member between said radially extending flange of said fixed core and said main valving unit; (b) inserting a coupling rod through a first central hole formed through said fixed core and a second central hole formed through said main valving unit; (c) fitting a tubular member around a barrel portion axially extending integrally from said radially extending flange of said fixed core in a direction away from said main valving unit; (d) placing a solenoid around said tubular member; (f) placing covering means over said movable core, said tubular member and said solenoid in a manner such that said covering means has a radially extending flange disposed in contact with said radially extending flange of said fixed core, while interposing a second annular sealing member between said covering means and said tubular member; and (g) fastening said covering means to said main valving unit by fastening means; wherein said steps (a) through (g) are carried out in the order recited above.

15. An assembling method as claimed in Claim 14, wherein said step (c) includes brazing one end portion of said tubular member close to said fixed core to said barrel portion of said fixed core along a whole periphery thereof.

16. An assembling method as claimed in Claim 14, wherein said step (c) includes fitting one end portion of said tubular member close to said fixed core into an annular groove formed in said fixed core at a boundary between said barrel portion and said radially extending flange thereof, while fitting a third annular sealing member into said annular groove.

17. An assembling method as claimed in any of Claims 14 through 16, wherein said step (g) includes fastening said covering means to said main valving unit by means of a plurality of bolts extending through said radially extending flange of said covering means and said radially extending flange of said fixed core.

18. An assembling method as claimed in any of Claims 14 through 16, wherein said first annular sealing member is interposed between an inner peripheral surface of a recess formed in said one end face of said main valving unit and an outer peripheral surface of a central protruded portion of said fixed core.

19. An assembling method as claimed in Claim 16, wherein said step (c) includes fitting said third annular sealing member into said annular groove in said fixed core and urgingly holding said third annular sealing member fitted in said annular groove by a stepped shoulder formed in an outer peripheral surface of said tubular member.

20. An assembling method as claimed in any of Claims 14 through 16, wherein said covering means comprises a first covering member and a second covering member, each having the shape of a cap, and said step (f) includes fitting said first cover of said covering means onto said tubular member so as to cover at least part of said tubular member and said movable core, and placing said second covering member over said tubular member and said solenoid in a manner such that said first covering member is fitted through a central hole formed through a bottom portion of said second covering member and has a radially extending flange formed at a peripheral surface thereof and engaging said bottom portion of said second covering member, and said radially extending flange of said covering means which is formed on a peripheral edge of said second covering member is disposed in contact with said radially extending flange of said fixed core.

21. An assembling method as claimed in Claim 20, further including fitting a lead wire leading to said solenoid through a hole formed through said radially extending flange of said first covering member and a hole formed through said bottom portion of said second covering member.

22. An assembling method as claimed in Claim 20 or Claim 21, wherein said step (f) includes inserting a peripheral edge of said first covering member into an annular recess defined between one end portion of said solenoid remote from said fixed core and a portion of said tubular member facing said one end portion of said solenoid, and interposing said second annular sealing member between said portion of said tubular member and said peripheral edge of said first covering member, within said annular recess.

23. An assembling method as claimed in any of Claims 14 through 16, wherein said main valving unit includes a vave casing having a return port formed therein, and an outer member disposed therein and having a central hole formed therethrough and a communication passage formed therethrough and communicating with said central hole, the method including fitting said outer member in a recess formed in one end face of said valve casing so as to have said communication passage thereof aligned with said return port, disposing said fixed core in a manner such that a first through hole axially extending through said fixed core is aligned with said communication passage of said outer member, and disposing said movable core in a manner such that a second through hole axially extending through said movable core is aligned with said first through hole.

# FIG.1

FIG.2